# EUROPÄISCHE PATENTSCHRIFT

(11) **EP 0 594 231 B1**
(45) Veröffentlichungstag und Bekanntmachung des Hinweises auf die Patenterteilung: **23.07.1997**
(21) Anmeldenummer: 93202611.5
(22) Anmeldetag: 07.09.1993
(51) Int. Cl.: C10J 3/54, C10J 3/56

(54) **Verfahren zum Vergasen von brennbare Bestandteile enthaltenden Abfallstoffen**
Process for gasifying waste products containing combustible substances
Procédé pour gazéifier des déchets contenant des substances combustibles

(30) Priorität: 21.10.1992 DE 4235412
(43) Veröffentlichungstag der Anmeldung: 27.04.1994
(73) Patentinhaber: METALLGESELLSCHAFT AG, 60323 Frankfurt am Main (DE)
(72) Erfinder: Schaub, Georg, Dr., D-61440 Oberursel (DE); Reimert, Rainer, Dr., D-65510 Idstein-Kröftel (DE); Löffler, Johannes, Dr., D-61352 Bad Homburg (DE); Beisswenger, Hans, D-65812 Bad Soden (DE)

(56) Entgegenhaltungen:
- EP-A- 0 120 397
- EP-A- 0 223 619
- EP-A- 0 468 357
- DE-A- 3 426 879
- DE-A- 3 632 534
- US-A- 3 599 610

## Beschreibung

Die Erfindung betrifft ein Verfahren zum Vergasen von brennbare Bestandteile enthaltenden Abfallstoffen in der zirkulierenden Wirbelschicht, wobei man die Abfallstoffe in einem Vergasungsreaktor unter Zufuhr von sauerstoffhaltigem Gas bei Temperaturen im Bereich von 700 bis 1000°C im Wirbel zustand vergast, vom unteren Bereich des Vergasungsreaktors Asche aus dem Reaktor abzieht, vom oberen Bereich des Vergasungsreaktors ein Gas-Feststoff-Gemisch einem Abscheider zuführt, aus dem Abscheider staubhaltiges Gas abzieht und einer Brennkammer zuführt, in welcher man das Gas bei Temperaturen von 1200 bis 1900°C verbrennt, wobei eine flüssige Schlacke und Verbrennungsgas entstehen, die man getrennt abzieht, und wobei man die im Abscheider abgeschiedenen Feststoffe mindestens teilweise in den unteren Bereich des Vergasungsreaktors zurückführt.

Ein solches Verfahren ist in DE-A-3632534 beschrieben, allerdings arbeitet man dort mit einem zweistufigen Abscheider. Das bekannte Verfahren dient vor allem der Vergasung von tierischem Dünger oder Lignit. Der Erfindung liegt die Aufgabe zugrunde, die Vergasung der Abfallstoffe beim eingangs genannten Verfahren so durchzuführen, daß die Menge der aus dem Verfahren abgezogenen Asche möglichst gering ist. Gleichzeitig soll dafür gesorgt werden, daß die Reinigung des bei der Vergasung entstehenden Abgases möglichst kostengünstig erfolgen kann und die Feststoffrückstände ohne großen Aufwand weiterverarbeitet oder deponiert werden können. Die Aufgabe wird erfindungsgemäß dadurch gelöst, daß man aus dem Abscheider brennbares, staubhaltiges Gas
a) mit einem Kohlenstoffgehalt des Staubes von 30 bis 90 Gew.-%,
b) mit einem Gehalt an freiem O₂ im Gas von höchstens 1 Vol.-%,
c) mit einem Heizwert von etwa 3000 bis 6000 kJ/Nm³ und
d) mit einem Staubgehalt von 5 bis 500 g/Nm³
abzieht, welches man der Brennkammer zuführt, und daß man die aus dem unteren Bereich des Reaktors abgezogene Asche mindestens teilweise ebenfalls in die Brennkammer leitet, wobei man der Brennkammer pro Nm³ Gas (feststofffrei gerechnet) mindestens 100g Asche zuführt. Die Brennkammer kann so ausgestaltet werden, daß man ihr maximal die gesamte Asche aus dem Vergasungsreaktor zuführen kann.

Die in der Brennkammer gebildete flüssige Schlacke weist nach ihrer Abkühlung nur noch eine geringe Eluierbarkeit auf, so daß sie sich verwerten oder auch einfach deponieren läßt. Durch die Verbrennung in der Brennkammer wird so das Problem der vom Abscheider kommenden Flugstäube mit ihrem erheblichen Kohlenstoffgehalt und ihrem nicht zu vernachlässigenden Gehalt an Schwermetallen gelöst. Gleichzeitig werden organische Schadstoffe, insbesondere Dioxine und Furane, in der Brennkammer vollständig zerstört.

Um in der Brennkammer genügend hohe Temperaturen zu erreichen, kann es zweckmäßig sein, neben dem staubhaltigen Gas aus dem Abscheider auch noch Zusatzbrennstoff zuzuführen. Ein Schwerpunkt der Erfindung besteht darin, der Brennkammer Feststoffe aus dem Vergasungsreaktor aufzugeben. Dabei verringert man die Menge der aus dem Vergasungsreaktor abzuziehenden Asche und erzeugt in der Brennkammer eine größere Menge an flüssiger Schlacke, deren Kohlenstoffgehalt nur noch sehr gering ist und die die bereits erwähnte geringe Eluierbarkeit aufweist.

Um die Bedingungen im Vergasungsreaktor einzustellen, gibt es an sich bekannte Möglichkeiten wie z.B. die zusätzliche Zufuhr von Wasserdampf oder Rauchgas neben dem nötigen Sauerstoff, z.B. in Form von Luft. Die Luft kann dabei auch mit Sauerstoff angereichert sein. Vorzugsweise führt man dem Vergasungsreaktor vorgewärmtes sauerstoffhaltiges Gas, z.B. Luft, mit einer Temperatur im Bereich von 200 bis 600°C zu. Es kann ferner zweckmäßig sein, auch dem Vergasungsreaktor Zusatzbrennstoff, z.B. Kohle, zusammen mit den Abfallstoffen aufzugeben. Vor allem in der Anfahrphase der Vergasung ist dies üblicherweise notwendig. Zumeist liegt das Gewichtsverhältnis der Menge an Abfallstoffen, die man pro Zeiteinheit in den Vergasungsreaktor leitet, zur Menge der pro Zeiteinheit vom Abscheider kommenden, zum Vergasungsreaktor zurückgeführten Feststoffe im Bereich von 1:10 bis 1:100.

Bei den vergasenden Abfallstoffen handelt es sich bevorzugt um kommunale oder industrielle Abfälle sowie auch um Sonderabfälle. Die Abfallstoffe können nicht nur Feststoffe, sondern auch schlammförmig, teigig oder teilweise flüssig sein. Ist der Feststoffgehalt der Abfälle niedrig, kann man inerte Feststoffe, z.B. Sand oder aus dem Vergasungsreaktor abgezogene Asche, zumischen.

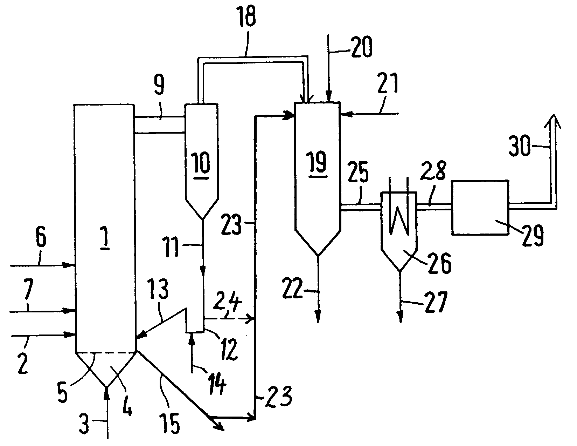

Weitere Ausgestaltungsmöglichkeiten des Verfahrens werden mit Hilfe der Zeichnung erläutert, die ein vereinfachtes Fließschema zeigt.

Dem Vergasungsreaktor (1) gibt man durch die Leitung (2) zerkleinerte Abfälle auf und führt durch die Leitung (3) Wirbelluft zu, die vorzugsweise vorerhitzt ist. Die Luft gelangt zunächst in eine Verteilkammer (4) und tritt dann durch einen Düsenrost (5) in den Reaktor (1) ein. Sekundärluft, die vorzugsweise ebenfalls vorerhitzt ist, wird durch die Leitung (6) zugespeist. Falls erforderlich, kann man durch die Leitung (7) Zusatzbrennstoff, z.B. Kohle oder Öl, heranführen, alternativ kann es sich herbei auch um eine mit Öl oder Gas befeuerte Stützfeuerung handelt, die vor allem in der Anfahrphase wirksam wird.

Im Reaktor (1) befinden sich Gase und Feststoffe im Zustand der zirkulierenden Wirbelschicht. Ein Gas-Feststoff-Gemisch verläßt den Reaktor (1) durch den Kanal (9) und wird in einem Feststoffabscheider, bei dem es sich z.B. um einen Zyklon (10) handeln kann, getrennt. Abgeschiedene Feststoffe gelangen durch die Leitung (11), den Siphon (12) und die Leitung (13) zurück in den unteren Bereich des Vergasungsreaktors (1). Durch eine Luftzuspeisung (14) wird der Feststoffdurchgang durch den Siphon (12) und die Leitung (13) in an sich bekannter Weise gesteuert. Aus dem Vergasungsreaktor zieht man Asche durch die Leitung (15) ab und führt sie mindestens teilweise auf dem Transportweg (23) in eine Brennkammer (19).

Die Temperaturen im Vergasungsreaktor (1) liegen im Bereich von 700 bis 1000°C und vorzugsweise bei mindestens 750°C. Durch die unterstöchiometrische Sauerstoffzufuhr in den Reaktor (1) weist das aus dem Zyklon (10) durch die Leitung (18) abgezogene staubhaltige Gas brennbare Bestandteile und einen erheblichen Heizwert auf. Gleichzeitig enthält dieses Gas aber auch Schadstoffe und hochgiftige Bestandteile, zu denen Dioxine und Furane gehören.

Das Gas der Leitung (18) wird ebenfalls der Brennkammer (19) zugeführt, in welcher es einer Verbrennung bei Temperaturen im Bereich von 1200 bis 1900°C unterworfen wird. Sauerstoffhaltiges Gas (z.B. Luft oder mit Sauerstoff angereicherte Luft oder technisch reiner Sauerstoff) kommt aus der Leitung (20). Für Zusatzbrennstoff, z.B. Erdgas oder Öl, ist die Leitung (21) vorgesehen. Die Bedingungen in der Brennkammer (19) werden so gewählt, daß neben dem Verbrennungsgas flüssige Schlacke entsteht, die man in der Leitung (22) abzieht.

Für das Verfahren ist es wichtig, der Brennkammer auch Asche aus dem Vergasungsreaktor zuzuführen. Weitere Fqststoffe können z.B. aus dem Bereich des Siphons (12) abgezweigt und auf dem gestrichelt eingezeichneten Transportweg (24) und über den Transportweg (23) in die Brennkammer (19) geführt werden. Die intensive Verbrennung in der Brennkammer (19) führt zu einer Schlacke mit einem sehr geringen Restgehalt an Kohlenstoff und insbesondere weist diese Schlacke eine sehr geringe Eluierbarkeit auf, so daß sie z.B. im Baubereich wiederverwendet oder problemlos deponiert werden kann.

Aus der Brennkammer (19) zieht man Verbrennungsgas in der Leitung (25) ab und kühlt und reinigt es in an sich bekannter, nur schematisch dargestellter Weise. Die Kühlung dient der Abhitzeverwertung, zu diesem Zweck ist ein Abhitzekessel (26) angedeutet, in welchem üblicherweise auch noch etwas Staub anfällt. Dieser Staub wird in der Leitung (27) abgezogen. Das teilweise gekühlte Verbrennungsgas gelangt dann durch die Leitung (28) zur Gasreinigung (29), die in bekannter Weise ausgestaltet ist, um z.B. HCl, HF, Schwefelverbindungen und NOₓ zu entfernen. Hierbei können trockene und nasse Reinigungsverfahren kombiniert werden, auch sind für die Entstaubung Filter, z.B. Elektrofilter, notwendig. Ein geeignetes Gasreinigungsverfahren ist in DE-C-40 12 887 beschrieben. Schließlich zieht das gekühlte und gereinigte Verbrennungsgas durch den Kamin (30) ab.

Durch die Verbrennung bei hohen Temperaturen in der Brennkammer (19) werden Dioxine und Furane weitgehend zerstört. Dadurch findet man im Nm³ Gas der Leitung (25) nur noch weniger als 0,01 Nanogramm dieser hochgiftigen Substanzen, während das Gas der Leitung (18) noch bis etwa 10 ng/Nm³ davon enthält.

### Beispiel

In einer der Zeichnung entsprechenden Anlage wird im Vergasungsreaktor (1) Hausmüll mit folgender Elementaranalyse bei Temperaturen von etwa 800°C bei Atmosphärendruck vergast:

| | |
|---|---|
| C | 23 Gew.% |
| H | 3 Gew.% |
| O | 15 Gew.% |
| N | 0,3 Gew.% |
| S | 0,4 Gew.% |
| H₂O | 33 Gew.% |
| Asche | 25,3 Gew.% |

Pro Tonne Müll werden dem Reaktor (1) insgesamt 840 Nm³ Luft von 350°C als Vergasungsmittel zugeführt. Es entstehen 253 kg Asche mit einem C-Gehalt von 2,8 Gew.% und 1634 Nm³ an brennbare Bestandteile enthaltendem Gas, das in der Leitung (18) einer Schmelzkammerfeuerung (19) zugeführt wird. Dieses Gas enthält 32,6 kg Staub mit einem C-Gehalt von 70 Gew.%, es hat einen Heizwert von 3180 kJ/Nm³ und ist praktisch frei von molekularem O₂. Die Hauptkomponenten des Gases der Leitung (18) sind folgende:

| | |
|---|---|
| CO₂ | 10,15 Vol.% |
| CO | 7,75 Vol.% |
| H₂ | 6,22 Vol.% |
| CH₄ | 2,70 Vol.% |
| CₙHₘ | 0,60 Vol.% |
| H₂S | 0,16 Vol.% |
| COS | 0,01 Vol.% |
| NH₃ | 0,09 Vol.% |
| HCN | 0,01 Vol.% |
| N₂ | 40,73 Vol.% |
| H₂O | 31,56 Vol.% |

Daneben enthält das Gas in geringen Mengen noch insbesondere HCl, HF, Schwefelverbindungen, Stickoxide, Dioxine und Furane.

Das Gas aus der Leitung (18) wird in der Schmelzkammer bei Temperaturen von etwa 1500°C ohne Zusatzbrennstoff mit 2513 Nm³ Luft von 350°C verbrannt. Es entstehen 1,22 kg flüssige Schlacke mit 2 Gew.% C und 4045 Nm³ Rauchgas, das 10,8 kg Staub mit sich führt. Das Rauchgas besteht vor allem aus

| | |
|---|---|
| CO₂ | 9,84 Vol.% |
| N₂ | 65,37 Vol.% |
| O₂ | 6,00 Vol.% |
| SO₂ | 0,07 Vol.% |
| H₂O | 18,72 Vol.% |

und enthält insbesondere noch HCl, HF, SO₂ und NOₓ. Um die Eluierbarkeit der Schlacke aus der Schmelzkammerfeuerung zu testen, wurden 100 g Schlacke in 1 l Wasser eine halbe Stunde lang gekocht und danach das abfiltrierte Wasser untersucht. Dabei wurde gefunden:

| | |
|---|---|
| elektrische Leitfähigkeit | 10,2 mS/m |
| Chlorid | 3,0 mg/l |
| Fluorid | 0,09 mg/l |
| Chrom | 0,03 mg/l |
| Eisen | 0,01 mg/l |
| Blei | 0,002 mg/l |

Der Gehalt an Cadmium und Kobalt lag jeweils unterhalb von 0,001 mg/l und der Hg-Gehalt lag unterhalb von 0,0001 mg/l.

## Patentansprüche

1. Verfahren zum Vergasen von brennbare Bestandteile enthaltenden Abfallstoffen in der zirkulierenden Wirbelschicht, wobei man die Abfallstoffe in einem Vergasungsreaktor unter Zufuhr von sauerstoffhaltigem Gas bei Temperaturen im Bereich von 700 bis 1000°C im Wirbelzustand vergast, vom unteren Bereich des Vergasungsreaktors Asche aus dem Reaktor abzieht, vom oberen Bereich des Vergasungsreaktors ein Gas-Feststoff-Gemisch einem Abscheider zuführt, aus dem Abscheider staubhaltiges Gas abzieht und einer Brennkammer zuführt, in welcher man das Gas bei Temperaturen von 1200 bis 1900°C verbrennt, wobei eine flüssige Schlacke und Verbrennungsgas entstehen, die man getrennt abzieht, und wobei man die im Abscheider abgeschiedenen Feststoffe mindestens teilweise in den unteren Bereich des Vergasungsreaktors zurückführt, dadurch gekennzeichnet, daß man aus dem Abscheider brennbares, staubhaltiges Gas
a) mit einem Kohlenstoffgehalt des Staubes von 30 bis 90 Gew.-%,
b) mit einem Gehalt an freiem O2 im Gas von höchstens 1 Vol.-%,
c) mit einem Heizwert von etwa 3000 bis 6000 kJ/Nm³ und
d) mit einem Staubgehalt von 5 bis 500 g/Nm³
abzieht, welches man der Brennkammer zuführt, und daß man die aus dem unteren Bereich des Reaktors abgezogene Asche mindestens teilweise ebenfalls in die Brennkammer leitet, wobei man der Brennkammer pro Nm³ Gas (feststofffrei gerechnet) mindestens 100 g Asche zuführt.

## Claims

1. A method for gasifying waste materials containing combustible constituents in a circulating fluidised bed, wherein the waste materials are gasified in the fluidised state in a gasification reactor with oxygen-containing gas being supplied at temperatures in the range of 700 to 1000°C, ash is removed from the reactor from the lower region of the gasification reactor, a gas/solids mixture is fed to a separator from the upper region of the gasification reactor, dust-containing gas is withdrawn from the separator and is fed to a combustion chamber in which the gas is burned at temperatures of 1200 to 1900°C, with a liquid slag and combustion gas being produced which are removed separately, and wherein the solids separated off in the separator are recycled at least in part into the lower region of the gasification reactor, characterised in that combustible, dust-containing gas
a) having a carbon content of the dust of 30 to 90% by weight,
b) having a content of free O₂ in the gas of at most 1% by volume,
c) having a calorific value of approximately 3000 to 6000 kJ/sm³ (standard cubic metre) and
d) having a dust content of 5 to 500 g/sm³
is withdrawn from the separator, which gas is fed to the combustion chamber, and that the ash removed from the lower region of the reactor is likewise passed at least in part into the combustion chamber, with at least 100 g ash being fed to the combustion chamber per sm³ gas (calculated free of solids).

## Revendications

1. Procédé de gazéification de déchets renfermant des constituants combustibles en lit fluidisé circulant, qui consiste à gazéifier à l'état fluidisé les déchets dans un réacteur de gazéification avec apport de gaz contenant de l'oxygène à des températures de l'ordre de 700 à 1000°C, à soutirer de la partie inférieure du réacteur de gazéification de la cendre du réacteur, à envoyer de la partie supérieure du réacteur de gazéification un mélange de gaz et de matières solides à un séparateur, à soutirer du séparateur du gaz contenant de la poussière et à l'envoyer à une chambre de combustion dans laquelle on brûle le gaz à des températures de 1200 à 1900°C avec production de scorie liquide et de gaz de combustion que l'on soutire séparément, les matières solides séparées dans le séparateur étant retournées au moins en partie à la partie inférieure du réacteur de gazéification, caractérisé en ce qu'il consiste à soutirer du séparateur du gaz combustible contenant de la poussière
a) avec une teneur en carbone de la poussière de 30 à 90 % en poids,
b) avec une teneur en O₂ libre du gaz de 1 % en volume au plus,
c) avec une capacité calorifique de 3000 à 6000 kJ/m³ normal environ, et
d) avec une teneur en poussière de 5 à 500 g/m³ normal,
que l'on envoie à la chambre de combustion et en ce que l'on envoie la cendre soutirée de la partie inférieure du réacteur au moins partiellement également à la chambre de combustion, en envoyant à la chambre de combustion au moins 100 g de cendres par m³ normal de gaz (calculer exempt de matières solides).
